# EUROPEAN PATENT APPLICATION

(11) **EP 4 848 200 A1**
(43) Date of publication of application: **02.12.2026**
(21) Application number: 25461524.8
(22) Date of filing: 30.05.2025
(51) Int. Cl.: G06T 7/00, G06T 7/55

(54) **METHOD FOR GENERATING VIRTUAL 3D MAPS FROM MAMMOGRAPHY**

(71) Applicant: Pixel Technology Sp. z o.o., 93-558 Lodz (PL)
(72) Inventor: MUSIALEK, Jakub, 95-050 Konstantynow Lodzki (PL)
(74) Representative: Kancelaria Eupatent.pl Sp. z o.o.

(57) **Abstract**

A computer-implemented method for creating virtual 3D maps based on 2D historical surveys and reference tomosynthesis, characterized in that it includes: normalizing (101) input data by creating a time series of 2D surveys, mapping to 3D surveys with the requirement of a minimum of one 3D survey, and normalizing intensity to a range of (0-1), detection (102) of anatomical landmarks including identification of fixed points: nipple, chest wall line, ribs, pectoralis major muscle, skin contour, and variable points: blood vessels, milk ducts, glandular tissue, tissue boundaries, matching (103) 2D points to 3D points using artificial intelligence models, cross-correlation and recording confidence levels for each match, 3D anatomical deformation (104) using high confidence control points and Thin Plate Spline method with trilinear interpolation, hybrid reconstruction (105-111) combining reference anatomy with generated 3D pathology by creating expansion heatmaps and modelling pathology growth, and automatic quality control (112) with testing of anatomical integrity.

## Description

### TECHNICAL FIELD

The present invention relates to the field of medical imaging, in particular to a computer-implemented method and a computer system for generating virtual three-dimensional (3D) maps, that is, generating 3D mammographic images on the basis of historical two-dimensional (2D) examinations and reference tomosynthesis.

The invention has applications in radiological diagnostics, particularly in mammographic examinations, enabling spatial reconstruction of pathology based on historical data.

### PRIOR ART

Modern diagnostic imaging often requires the comparison of examinations performed at different times to assess the progression of pathology. Traditional 2D examinations, such as mammography, do not provide spatial information, making it difficult to accurately assess the growth and spread of lesions in 3D space.

Existing 3D reconstruction methods typically require native 3D data or multiple acquisitions, which increases examination costs and patient radiation exposure. In addition to this, there is a lack of effective methods to use the rich resource of historical 2D studies to create meaningful 3D representations.

### SUMMARY OF THE INVENTION

The purpose of the invention is to solve at least some of the problems known from the state of the art, such as:
- the inability to effectively use historical 2D surveys for spatial analysis;
- the lack of tools to track the progression of pathology in 3D space from 2D data;
- limited availability of 3D studies in mammography;
- the large number of retrospective studies performed in 2D.

The invention provides a system for creating virtual 3D maps based on historical 2D studies and reference tomosynthesis. The method according to the invention uses advanced algorithms for anatomical point matching, spatial deformation and hybrid reconstruction combining reference anatomy with generated pathology.

The essence of the invention is manifested in the use of at least some, or advantageously all, of the following features:
- normalization and matching of input data from different time periods;
- detection and mapping of anatomical landmarks between 2D and 3D images;
- advanced anatomical deformation using Thin Plate Spline methods;
- generation of spatial heatmaps of pathology expansion based on historical progression;
- hybrid reconstruction combining reference 3D anatomy with generated pathology;
- automatic quality control and validation of results.

The method and system according to the invention enable efficient use of available historical studies to create clinically useful 3D representations, supporting diagnosis and treatment planning.

These and other features, aspects and advantages of the invention will become clearer after reading the following drawings, descriptions and patent claims.

### BRIEF DESCRIPTION OF DRAWINGS

The object of the invention is illustrated by means of examples of implementation in the drawing in which:
Fig. 1 schematically shows an example of the implementation of the method according to the invention;
Fig. 2 schematically shows a computer system for implementing the method according to the invention;

### DETAILED DESCRIPTION

The detailed description below shows the currently preferred ways of implementing the invention. This description should not be interpreted as limiting, but only serves to illustrate the general principles of the invention.

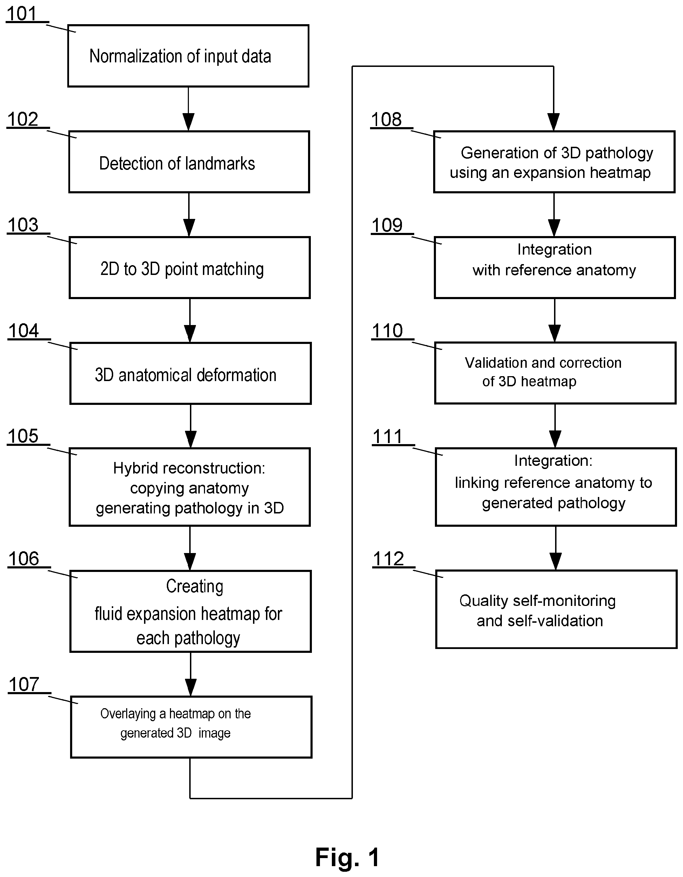

An example of an implementation of a method according to the invention is shown in Fig. 1. According to this example method, the following steps are implemented.

In step 101, the input data is normalised. The system collects all necessary studies by forming a series of 2D studies into a time series and marking the 3D studies in the time series. A mapping of the 2D studies to the nearest matching 3D studies in the temporal context follows, with a minimum of one 3D study required as a reference. Preparing the images for analysis involves normalising the intensities of all images to the same range (0-1), ensuring that the input data is consistent regardless of acquisition parameters and differences in imaging device calibration. In this step, optional registration of 2D examinations on top of each other is performed, in order to maximise the approximation of the analysed examinations to a common X,Y system with respect to pathological changes.

In step 102, landmark detection is performed. The system identifies anatomical fixed points and marks them with X,Y coordinates in the following areas:
- nipple location - the system finds the darkest point on the front of the breast, which is the fixed reference point for all examinations;
- delineation of the chest wall line - the algorithm identifies a straight line in the posterior part of the image, which represents the anatomical boundary between breast tissue and bony structures;
- determination of visible ribs - the system looks for white, longitudinal bony structures characterised by high radiological density;
- locating the pectoralis major muscle - the algorithm identifies a triangular area in the upper part of the image with a characteristic muscular texture;
- delineation of the skin contour - the system circumscribes the outer border of the breast, defining the area of interest for further analysis.

The system additionally identifies variable points marked with X,Y coordinates:
- blood vessels - the algorithm looks for thin, dark lines branching in a characteristic manner, using edge detection filters and morphological analysis;
- milk ducts - the system identifies structures leading to the nipple, characterised by their specific architecture and course;
- tissue boundaries - the system marks the transition points of adipose tissue to glandular tissue, using intensity gradient and transition analysis.

In step 103, the matching of 2D points to 3D points is performed. The system selects a reference 3D study (tomosynthesis) and finds points similar to those identified in the 2D image in each layer of the tomosynthesis study. For each point from the 2D image, the system performs the following operations:
- searches all 3D layers looking for a similar anatomical pattern;
- compares the patterns using cross-correlation and an advanced AI model to indicate structural similarities;
- records the X, Y, Z coordinates of the best match in 3D space and registers;
- for each match point- the system marks the level of match on a scale: high, medium, low, as determined by the AI model based on recognition confidence.

Then, to create a linkage map, the system links each 2D point to its corresponding 3D point and records in a table: $Point _ 2 D \left(X, Y\right) \to Point _ 3 D \left(X, Y, Z\right) + level of confidence$

In addition to this, the table contains metadata about the type of anatomical point and the matching characteristics.

In step 104, the 3D anatomical deformation is carried out. In order to detect control points, the system retrieves all 2D↔3D point pairs with high confidence and removes low confidence pairs that may introduce errors into the deformation process. Then, the deformation of the 3D study is calculated: the process is based on the principle that if a point in the 2D image is in position A and the corresponding point in the 3D study is in position B, the entire anatomical region should move from position B to position A. The system uses the mathematical method "Thin Plate Spline", which models the deformation as an elastic sheet pulled by the control points. The greater the distance from the control point, the smaller the deformation, ensuring smoothness and anatomical reliability of the transformation.

The application of the deformation with a calculated checkpoint is done as follows:
- the system passes through each voxel (3D element) in the reference study;
- the system calculates the new position of that voxel after applying the Thin Plate Spline deformation;
- the system transfers the intensity from the old position to the new position in 3D space;
- the system uses trilinear interpolation if the new position does not fall exactly on the voxel grid.

In step 105, a hybrid reconstruction is carried out - copying anatomy + generating pathology in 3D. To prepare the anatomy base from the 3D reference, the system copies the entire normal anatomy from the latest 3D tomosynthesis study and generates a new 3D study as the basis for the reconstruction. It retains all healthy structures: adipose tissue, glandular tissue, blood vessels, milk ducts. The system marks the healthy areas - these regions will remain unchanged during the reconstruction process. This copy of the reference anatomy makes up the majority of the final image volume - only the pathological areas will be generated from scratch.

In order to identify pathological areas on a historical 2D study:
- the system segments only the pathologies by cutting out the contours of the lesions using advanced segmentation algorithms;
- the system calculates the volumetrics of each pathology: area in cm², position (X,Y), shape and morphological characteristics;
- classifies the type of pathology based on imaging features.

The system then creates a history of pathology progression: it analyses all 2D examinations chronologically and tracks each pathology over time, creating a progression table containing the dates of the examinations and the parameters of each identified pathology, for example in the following way:

| Date | Pathology A | Pathology B | Pathology C |
|---|---|---|---|
| 2020.01 | 3,2 cm2 | - | - |
| 2020.07 | 4,1 cm2 | 1,8 cm3 | - |
| 2021.03 | 5,3 cm2 | 2,4 cm3 | 0,9 cm3 |
| 2021.09 | 6,8 cm2 | 3,1 cm 3 | 1,5 cm3 |

In step 106, a smooth expansion heatmap is created for each pathology. For this purpose, a calculation of the baseline growth rate of the area is carried out:
- linear growth: if the pathology grows uniformly over time, the baseline value amounts to 1.0;
- accelerating growth: if the growth rate increases over time, then a baseline value amounts to 1.5-2.0;
- decelerating growth: if the growth rate is decreasing over time, then a baseline value amounts to 0.5-0.8.

Further, an expansion intensity map is built. The system starts from the centre of the pathology with the highest value (e.g. 2.5 for an aggressive tumour) and expands concentrically, with each millimetre from the centre there is a decrease of 0.1-0.3 values.

Modulation according to the directions of growth is then implemented:
- direction of main expansion: preservation of the full value for a greater distance;
- lateral directions: faster decrease in value;
- blocked directions (frame wall): very fast decrease to a value of 0.1.

The colour gradient is smooth and correlated with the level of expansion, for example it takes on the following values:
- red (255, 0, 0) - maximum expansion
- dark blue (0, 0, 100) - no expansion
- colour transitions in the colour spectrum

The heatmap generated in this way is smoothed with filters, with the following assumptions:
- Gauss filter σ=2-3 mm ensures removal of sharp transitions, creation of natural gradients
- preservation of local maxima - so as not to obliterate the main centres of expansion
- clipping to pathology boundaries: the heatmap can't extend beyond the actual boundaries of the lesion

In step 107, the overlay of the heatmap on the generated 3D image is carried out. For each pixel (X,Y) of the heatmap:
- the system takes the expansion value from the heatmap (for example 1.7);
- the system expands this value to all Z layers at that position;
- the system multiplies the intensity of each voxel: new_intensity = base × heatmap _value.

For example:
- Voxel in the red zone (value 2.2): brightness × 2.2 = 120% brighter;
- Voxel in the yellow zone (value 1.3): brightness × 1.3 = 30% brighter;
- Voxel in the blue zone (value 0.2): brightness × 0.2 = 80% darker.

In step 108, the generation of the 3D pathology using the expansion heatmap is carried out. The preparation of the 3D base layer consists of the system cutting the pathology region from the 3D reference anatomy (the area where the pathology will be generated) and then saving the original values as a basis for modification.

Defining the depth of pathology based on the reference tomosynthesis parameters is performed as follows:
- reading the frame thickness from the DICOM tomosynthesis metadata;
- counting the number of frames in the tomosynthesis;
- calculation: Total depth = thickness of the frame × number_of_frames;
- determination: Pathology depth = min(stretch_of_pathology _2D, total_depth_ of_tomosynthesis).

The heatmap application for each layer Z is done for each depth layer (from Z=0 to Z=max_depth).

Example of depth factor calculation:
- Area (Z=0): factor = 1.0 (full power of heatmap)
- Centre (Z=max): factor = 1.2 (maximum activity in the centre)
- Depth (Z=max): factor = 0.4 (waning activity at the bottom)

Example of applying the heatmap to each voxel: For each voxel (X,Y,Z):
- Retrieve the value of heatmap from the position (X,Y)
- Calculation: 3D_value = value of heatmap × depth coefficient [Z].
- Calculation: new_intensity = basic_intensity × 3D_value

Examples of modelling different types of pathology growth, depending on the type of growth, will be presented below.

Surface (diffused) growth:
- Main impact: layers Z=0 to Z=30% of depth
- Heatmap retains full strength in the upper layers
- Rapid decrease in intensity deep into the tissue

Deep (infiltrative) growth:
- Main impact: all layers evenly
- Heatmap retains full power throughout depth of pathology
- Depth factor = 1.0 for all layers Z

Mixed growth:
- Combination of the above depending on the nature of the pathology
- Different depth coefficients for different areas of the heatmap

In step 109, integration with the reference anatomy takes place. A seamless link to healthy tissue is carrired out:
- at the edges of the pathology (where heatmap amounts to 0.1): 70% of intensity from heatmap + 30% from reference anatomy;
- in the centre of the pathology (where heatmap amounts to > 1.5): 90% of intensity from heatmap + 10% from reference anatomy.

Boundary filtering can be performed as follows:
- 3D Gaussian filter (σ = 1-2 mm) at pathology-healthy-tissue boundaries.
- Retention of focus in the centre of the pathology (no filtering)
- Anatomical continuity check - exclusion of "flying" fragments

In step 110, validation and correction of the 3D heatmap is carried out. A control projection test is carried out, in which a dump of the generated 3D pathology back onto the 2D plane is carried out, comparison with the original 2D image of the pathology, with an acceptable error of <10% difference in the pathology area.

With detected errors, correction can be performed:
- If projection is too bright: decrease in the heatmap value by 10-20%
- If the projection is too dark: increase in the heatmap value by 10-20%
- If the shape does not match: improvement of the gradient of the heatmap
- Maximum of 3 correction iterations

In addition to this, a check of medical realism can be performed, verifying whether the pathology looks anatomically plausible, whether it does not violate anatomical boundaries (does not pass through bony structures) and/or that the intensity gradient is smooth (no sudden jumps in value).

In step 111, integration, i.e. combining the reference anatomy with the generated pathology, is carried out. The system takes the copied 3D anatomy from step 105 and, for each pathological area, cuts out the corresponding region from the reference anatomy, inserts the generated 3D pathology in this place, guarantees smooth transitions between pathology and healthy tissue and maintains anatomical realism: pathology cannot "fly through the air".

Boundary smoothing can be used in this process:
- Using a Gaussian filter at the pathology↔healthy tissue boundaries
- Filter radius = 2-3 mm - sufficient for a smooth transition
- Preservation of pathology focus - not blurring the centre of the lesion

In step 112, quality self-monitoring and self-validation is implemented. An anatomical integrity test is performed, where tissue continuity is verified throughout the reconstructed volume and volume control is performed: the total breast volume must be close to the reference tomosynthesis result within the standard deviation. A back-projection test is also performed: dropping the 3D reconstruction back onto a 2D plane in the same projection as the original image, calculating the pixel-by-pixel difference (|original_image - reconstructed_image|). Structural similarity index (SSIM): target: >0.85 for acceptance of reconstruction quality

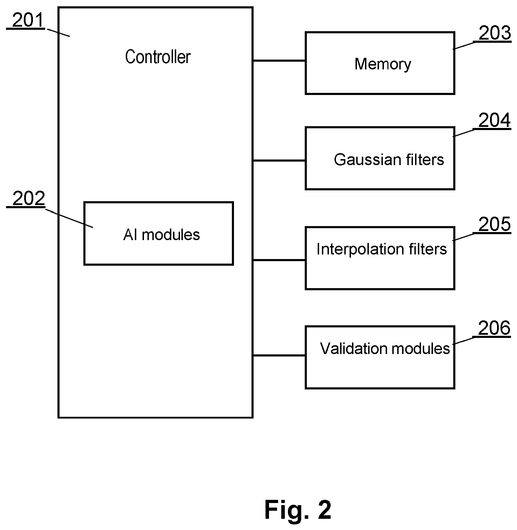

The above method can be implemented using a computer system, the main components of which are shown in Fig. 2. It includes a controller 201 with artificial intelligence modules 202 for point matching and similarity indication, a 203 data memory with DICOM metadata storage capability, Gaussian filter 204 and trilinear interpolation 205 modules, and a validation module 205 with SSIM index calculation. The individual components are configured to implement together all the steps of the method described above.

Although the invention has been described on the basis of a limited number of execution examples, it should be noted that many other variants, modifications and applications of the invention are possible. Therefore, the scope of protection of the invention as set out in the following patent claims is not limited to the implementation examples presented here.

## Claims

1. A computer-implemented method for creating virtual 3D maps based on 2D historical surveys and reference tomosynthesis, **characterised in that** it comprises:
- normalizing (101) the input data by creating a time series of 2D surveys, mapping to 3D surveys with the requirement of a minimum of one 3D survey, and normalising the intensity to a range (0-1),
- detecting (102) anatomical landmarks including identification of fixed points: nipple, chest wall line, ribs, pectoralis major muscle, skin contour, and variable points: blood vessels, milk ducts, glandular tissue, tissue boundaries,
- matching (103) 2D points to 3D points using artificial intelligence models, cross-correlation and recording confidence levels for each match,
- performing 3D anatomical deformation (104) using high confidence control points and Thin Plate Spline method with trilinear interpolation,
- performing hybrid reconstruction (105-111) combining reference anatomy with generated 3D pathology by creating expansion heatmaps and modelling pathology growth, and
- performing automatic quality control (112) with anatomical integrity testing.

2. The method according to claim 1, **characterised in that** the landmark detection comprises locating the nipple as the darkest point on the front of the breast, determining the line of the chest wall as a straight line in the rear of the image, and identifying the ribs as white longitudinal bony structures.

3. The method according to any of the preceding claims, **characterised in that** the matching of 2D points to 3D points uses a search of all 3D layers, a comparison of patterns using cross-correlation, and an artificial intelligence model to indicate similarities with a table notation: Point_2D (X,Y) → Point_3D (X,Y,Z) + level_of_confidence.

4. The method according to any of the preceding claims, **characterised in that** the 3D anatomical deformation uses the Thin Plate Spline method with the principle of transferring points from position B to position A, where the further away from the control point, the smaller the deformation, and trilinear interpolation for positions not matching the voxel grid.

5. The method according to any of the preceding claims, **characterised in that** the creation of the expansion heatmap comprises calculating a baseline growth rate with values of linear growth (1.0), accelerating growth (1.5-2.0), decelerating growth (0.5-0.8), and building an intensity map with the centre of pathology having the highest value and a decrease of 0.1-0.3 for each millimetre.

6. The method according to any of the preceding claims, **characterised in that** the expansion heatmap uses a colour gradient from red (255,0,0) for maximum expansion to dark blue (0,0,100) for no expansion, with Gaussian filter smoothing σ=2-3 mm while maintaining local maxima.

7. The method according to any of the preceding claims, **characterised in that** the generation of the 3D pathology comprises the definition of the pathology depth according to the formula: Pathology depth = min(stretch_of 2D pathology, total depth_of_tomosynthesis), where total depth = thickness_frame × number_of_frames from DICOM metadata.

8. The method according to any of the preceding claims, **characterised in that** the modelling of the growth of the pathology includes surface type (layers Z=0 to Z=30% of depth), deep type (depth factor 1.0 for all layers) and mixed type which is a combination of the above.

9. The method according to any of the preceding claims, **characterised in that** the integration with the reference anatomy uses a seamless blending where at the edges of the pathology 70% of the intensity from the heatmap + 30% from the reference anatomy is used and in the centre of the pathology - 90% from the heatmap + 10% from the reference anatomy.

10. The method according to any of the preceding claims, **characterised in that** the validation includes a control projection test with an error tolerance of <10%, a correction of the heatmap by 10-20% with errors, a maximum of 3 correction iterations and a check of medical realism.

11. A computer system for implementing the method according to any of claims 1-10, **characterised in that** it comprises the following modules:
- controller (201) with artificial intelligence modules (202) for matching points and indicating similarities;
- a memory (203) for data with the ability to store DICOM metadata;
- Gaussian filter modules (204) and trilinear interpolation (205);
- validation module (205) with SSIM index calculation,
wherein said modules (201-205) are configured to perform the steps of the method according to any of claims from 1 to 10.
